# EUROPEAN PATENT APPLICATION

(11) **EP 3 843 471 A1**
(43) Date of publication of application: **30.06.2021**
(21) Application number: 19851327.7
(22) Date of filing: 24.07.2019
(51) Int. Cl.: H04W 72/04, H04W 16/28

(54) **USER TERMINAL AND WIRELESS COMMUNICATION METHOD**

(30) Priority: 23.08.2018 JP 2018169196
(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2019/029001
(87) International publication number: WO 2020/039823

(57) **Abstract**

In future radio communication systems, a beam failure recovery (BFR) procedure for CORESET #0 is properly controlled. A user terminal according to one aspect of the present disclosure includes a receiving section that monitors a downlink control channel (PDCCH) in a given control resource set (CORESET), and a control section that determines a set of one or more resources for a downlink reference signal associated with the given CORESET as a resource(s) for beam failure detection.

## Description

### Technical Field

The present invention relates to user terminals and radio communication methods in next-generation mobile communication systems.

### Background Art

In initial access in future radio communication systems (e.g., New Radio (NR)), at least one of the detection of a Synchronization Signal Block (SSB), the acquisition of broadcast information (e.g., a Master Information Block (MIB)) transmitted by a broadcast channel (Physical Broadcast Channel (PBCH)), and the establishment of connection by random access is performed.

A Synchronization Signal Block (SSB) may be a signal block including a synchronization signal and a broadcast channel. The signal block may be referred to as an SS/PBCH block. The synchronization signal may be, for example, at least one of a Primary Synchronization Signal (PSS) and a Secondary Synchronization Signal (SSS) (Non Patent Literature 1).

### Citation List

### Non Patent Literature

Non Patent Literature 1: 3GPP TS 38.300 V15.2.0 "Technical Specification Group Radio Access Network; NR; NR and NG-RAN Overall description; Stage 2 (Release 15)", June 2018

### Summary of Invention

### Technical Problem

In future radio communication systems (e.g., Rel. 15 and New Radio (NR)), it has been studied to perform a procedure to switch to a different beam when the quality of a particular beam deteriorates, to reduce the occurrence of radio link failures (RLFs).

Beam recovery procedures in future radio communication systems have not revealed a beam failure recovery (BFR) configuration for CORESET #0.

The present invention has been made in view of this point. It is an object of the present invention to provide a user terminal and a radio communication method capable of properly controlling a beam failure recovery (BFR) procedure for CORESET #0 in future radio communication systems.

### Solution to Problem

According to an aspect of the present invention, a user terminal includes a receiving section that monitors a downlink control channel (PDCCH) in a given control resource set (CORESET), and a control section that determines a set of one or more resources for a downlink reference signal associated with the given CORESET as a resource(s) for beam failure detection.

### Advantageous Effects of Invention

According to the present invention, a beam failure recovery (BFR) procedure for CORESET #0 can be properly controlled in future radio communication systems.

### Brief Description of Drawings

Fig. 1 is a diagram showing an example of configuration of CORESET #0 based on a MIB.
Fig. 2 is a diagram showing an example of a beam recovery procedure in a future radio communication system.
Fig. 3 is a diagram showing an example of a schematic configuration of a radio communication system according to the present embodiment.
Fig. 4 is a diagram showing an example of a functional configuration of a radio base station according to the present embodiment.
Fig. 5 is a diagram showing an example of a functional configuration of a baseband signal processing section of the radio base station.
Fig. 6 is a diagram showing an example of a functional configuration of a user terminal according to the present embodiment.
Fig. 7 is a diagram showing an example of a functional configuration of a baseband signal processing section of the user terminal.
Fig. 8 is a diagram showing an example of a hardware configuration of a radio base station and a user terminal according to one embodiment of the present invention.

### Description of Embodiments

### (CORESET)

In initial access in future radio communication systems (e.g., New Radio (NR)), at least one of the detection of a Synchronization Signal Block (SSB), the acquisition of broadcast information (e.g., a Master Information Block (MIB)) transmitted by a broadcast channel (Physical Broadcast Channel (PBCH)), and the establishment of connection by random access is performed.

A Synchronization Signal Block (SSB) may be a signal block including a synchronization signal and a broadcast channel. The signal block may be referred to as an SS/PBCH block. The synchronization signal may be, for example, at least one of a Primary Synchronization Signal (PSS) and a Secondary Synchronization Signal (SSS).

A user terminal detects a Synchronization Signal Block (SSB), and based on information transmitted by a PBCH (e.g., a MIB), determines a Control Resource Set (CORESET) for system information (e.g., System Information Block 1 (SIB1) or Remaining Minimum System Information (RMSI)).

A CORESET is an allocation candidate region for a downlink control channel (e.g., a Physical Downlink Control Channel (PDCCH)). A CORESET for SIB1 (or RMSI) may be a CORESET in which a PDCCH (or Downlink Control Information (DCI)) used to schedule a downlink shared channel (e.g., a Physical Downlink Shared Channel (PDSCH)) to transmit SIB1 is located. A CORESET for SIB1 is also called CORESET #0, controlResourceSetZero, a common CORESET, common CORESET #0, a cell-specific CORESET, and so on.

CORESET #0 may be associated with one or more Search Spaces. The Search Spaces may include at least one of a Common Search Space (CSS) and a UE-specific Search Space (USS). A Common Search Space (CSS) is used to monitor DCI shared by one or more user terminals. A UE-specific Search Space (USS) is used to monitor DCI specific to a user terminal.

A Search Space or a set of Search Spaces associated with CORESET #0 may include at least one of Search Space #0 (searchSpaceZero), a Search Space for SIB1 (a type0-PDCCH common Search Space or searchSpaceSIB), a Search Space for Other System Information (OSI) (a type0A-PDCCH common Search Space or searchSpace-OSI), a Search Space for paging (a type2-PDCCH common Search Space or pagingSearchSpace), and a Search Space for random access (a type1-PDCCH common Search Space or ra-SearchSpace).

The user terminal may configure CORESET #0 based on an index in a MIB (also referred to as pdcch-ConfigSIB1 or RMSI-PDCCH-Config).

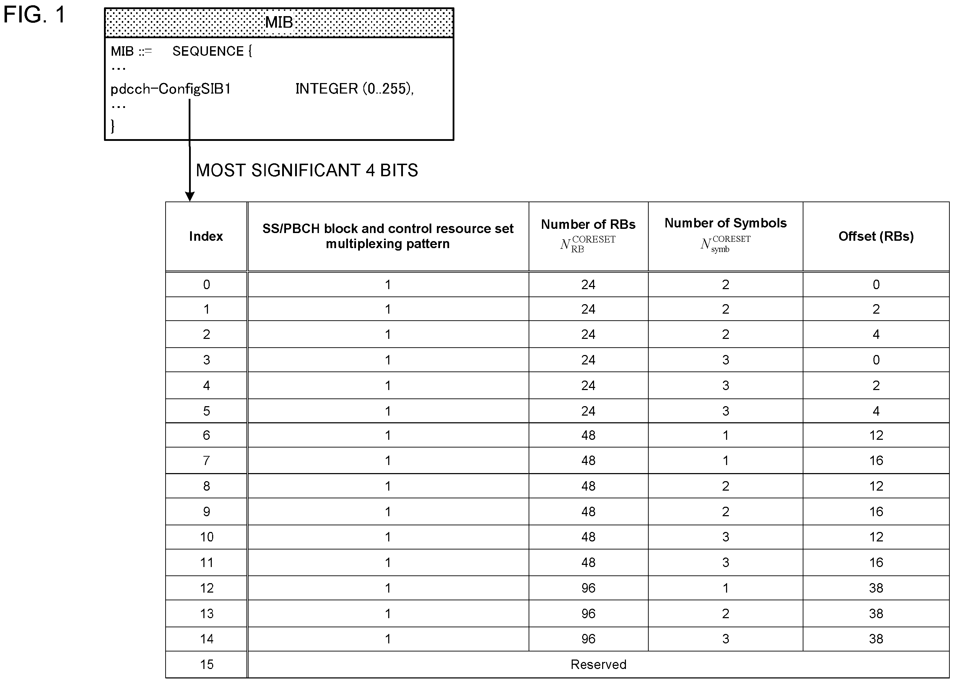

Fig. 1 is a diagram showing an example of configuration of CORESET #0 based on a MIB. As shown in Fig. 1, a MIB may include pdcch-ConfigSIB1 of a given number of bits (e.g., 8 bits). The user terminal configures at least one of a frequency domain resource and a time domain resource allocated to CORESET #0, based on at least one bit value of pdcch-ConfigSIB1. The frequency domain resource is also referred to as a bandwidth, a Resource Block (RB) or a Physical Resource Block (PRB), or the number of RBs. The time domain resource is also referred to as a period, a symbol, or the number of symbols.

In the example shown in Fig. 1, the user terminal may determine, for CORESET #0, the number of Resource Blocks (RBs) (NCORESETRB), the number of symbols (NCORESETsymb), and a Resource Block (RB) offset that are associated with an index indicated by 4 bits of pdcch-ConfigSIB1 (e.g., the higher-order 4 bits (most significant bits (MSBs)). The user terminal may determine Search Space #0 based on the remaining 4 bits of pdcch-ConfigSIB1 (e.g., the lower-order 4 bits (least significant bits (LSBs)).

Values associated with indexes in Fig. 1 are merely one example, and the present invention is not limited to those shown. For example, each value may be changed based on at least one of a minimum channel bandwidth and a subcarrier spacing (SCS).

The bandwidth of CORESET #0 may be replaced with the bandwidth of a bandwidth part (BWP) for initial access (also referred to as an initial BWP). A BWP is a partial bandwidth within a carrier (a component carrier (CC), a cell, a serving cell, or a system bandwidth). BWPs may include a BWP for an uplink (an uplink BWP) and a BWP for a downlink (a downlink BWP).

The user terminal is configured with one or more BWPs (one or more uplink BWPs and/or one or more downlink BWPs). At least one of the configured BWPs may be activated. An activated BWP is also called an active BWP.

The user terminal may determine CORESET #0 based on parameters for CORESET #0 (also referred to as controlResourceSetZero) in SIB1. controlResourceSetZero (e.g., 4 bits) may be interpreted as the corresponding bits (e.g., the higher-order 4 bits) in pdcch-ConfigSIB1 in the MIB.

In Fig. 1, the user terminal may determine, for CORESET #0, the number of Resource Blocks (RBs) (NCORESETRB), the number of symbols (NCORESETsymb), and a Resource Block (RB) offset that are associated with an index indicated by controlResourceSetZero.

controlResourceSetZero in SIB1 may be configured to each serving cell or each downlink BWP. Even if controlResourceSetZero is included in PDCCH configuration information (pdcchConfigCommon) in an initial BWP (BWP #0), the user terminal may acquire parameters for CORESET #0 regardless of a current active BWP.

### (QCL/TCI)

The user terminal may assume that an antenna port for a PDCCH Demodulation Reference Signal (DMRS) in CORESET #0 (or a Search Space associated with CORESET #0) configured based on a MIB or SIB1 has a quasi-co-location (QCL) relationship with a detected Synchronization Signal Block (SSB).

QCL is an indicator of the statistical characteristics of at least one of a channel and a signal (channel/signal). If one signal or channel has a QCL relationship with another signal or channel, it may mean that it can be assumed that these different signals or channels are the same in at least one of Doppler shift, Doppler spread, average delay, delay spread, and spatial parameter (e.g., Spatial Rx Parameter) (are QCL in at least one of these).

The Spatial Rx Parameter may correspond to a reception beam of the user terminal (e.g., a reception analog beam), and the beam may be identified based on spatial QCL. QCL and at least one element of QCL in the present disclosure may be replaced with spatial QCL (sQCL).

For QCL, multiple QCL types may be defined. For example, four QCL types (QCL type A to QCL type D) with different parameters or parameter sets that allow assumption of sameness may be provided.

QCL type A is QCL that allows assumption of sameness in Doppler shift, Doppler spread, average delay, and delay spread.

QCL type B is QCL that allows assumption of sameness in Doppler shift and Doppler spread.

QCL type C is QCL that allows assumption of sameness in average delay and Doppler shift.

QCL type D is QCL that allows assumption of sameness in Spatial Rx Parameter.

In future radio communication systems, it has been studied to control channel transmission and reception processing based on a Transmission Configuration Indicator (TCI) state (TCI state).

A TCI state may indicate QCL information. Alternatively, a TCI state may include QCL information. At least one of a TCI state and QCL information may be, for example, information about QCL between a channel of interest or a reference signal for that channel and a different signal (e.g., a different downlink reference signal). The information about QCL may include, for example, at least one of information about a downlink reference signal having a QCL relationship and information indicating a QCL type described above.

A signal (RS, SSB, or CSI-RS) that is QCL with a PDCCH DMRS may be referred to as a PDCCH QCL source. A TCI state may indicate a QCL source.

It has been studied to change a QCL source (TCI state) for CORESET #0 by a random access procedure.

The user terminal is configured with one or more Synchronization Signal Blocks (SSBs) or measurement reference signals (Channel State Information Reference Signals (CSI-RSs)) by dedicated RACH configuration (RACH-ConfigDedicated) for configuring at least one of a PRACH preamble and resource for contention-free random access (CFRA).

The user terminal may measure Synchronization Signal Blocks (SSBs) or CSI-RSs, select a PRACH resource corresponding to a Synchronization Signal Block (SSB) or a CSI-RS selected based on the measurement results, to transmit a PRACH. The user terminal may determine a Synchronization Signal Block (SSB) or a CSI-RS selected during CFRA as a new QCL source (TCI state) for CORESET #0 after CFRA.

The user terminal may determine a Synchronization Signal Block (SSB) selected during contention-based random access (CBRA) as a new QCL source (TCI state) for CORESET #0 after CBRA.

### (Beam failure recovery)

In future radio communication systems (e.g., NR and Rel. 15 and later), it has been studied to perform communications using beam forming (BF). To improve communication quality using beam forming (BF), it has been studied to control at least one of signal transmission and reception, considering a quasi-co-location (QCL) relationship (QCL relationship) between multiple signals.

When beam forming (BF) is used, it becomes susceptible to blockage by obstacles, and thus radio link quality can deteriorate, causing frequent radio link failures (RLFs). When a radio link failure (RLF) occurs, cell re-connection is required. Thus, frequent radio link failures (RLFs) lead to a reduction in system throughput.

In future radio communication systems (e.g., NR), it has been studied to perform a procedure to switch to a different beam when the quality of a particular beam deteriorates, to reduce the occurrence of radio link failures (RLFs). The procedure to switch to a different beam may be referred to as beam recovery (BR), beam failure recovery (BFR), Layer 1/Layer 2 (L1/L2) beam recovery, or the like. A beam failure recovery (BFR) procedure may simply be referred to as BFR.

A beam failure in the present disclosure may be referred to as a link failure.

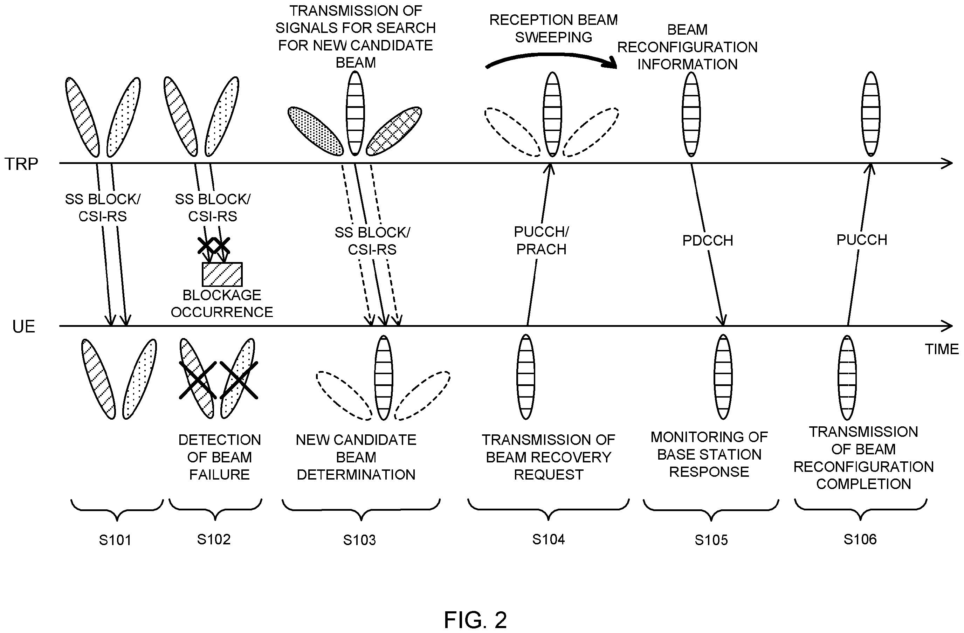

Fig. 2 is a diagram showing an example of a beam recovery procedure of a future radio communication system. The number of beams and so on shown in Fig. 2 are one example, and the present invention is not limited to this.

In an initial state (step S101), a user terminal performs measurements based on reference signal (RS) resources transmitted from a Transmission Reception Point (TRP) using two beams. The reference signal may be at least one of a Synchronization Signal Block (SSB) and a Channel State Information RS (CSI-RS). The Synchronization Signal Block (SSB) may also be referred to as an SS/Physical Broadcast Channel (PBCH) block.

The reference signal may be at least one of a Primary Synchronization Signal (Primary SS (PSS)), a Secondary Synchronization Signal (Secondary SS (SSS)), a Mobility Reference Signal (Mobility RS (MRS)), a Synchronization Signal Block (SSB), a signal included in an SSB, a CSI-RS, a Demodulation Reference Signal (Demodulation RS (DMRS)), and a beam-specific signal, or a signal configured by expanding or changing these. The reference signal measured in step S101 may be referred to as a Beam Failure Detection RS (BFD-RS).

In step S102, radio waves from the Transmission Reception point (TRP) are blocked, and consequently the user terminal cannot detect the Beam Failure Detection RS (BFD-RS). Such blockage is caused by, for example, the influence of obstacles, fading, interference, or the like between the user terminal and the Transmission Reception Point (TRP).

The user terminal detects a beam failure when a given condition is satisfied. The user terminal may detect the occurrence of a beam failure when, for example, Block Error Rates (BLERs) in all configured Beam Failure Detection RSs (BFD-RSs) (BFD-RS resource configurations) are below a threshold value. When the occurrence of a beam failure is detected, a lower layer (physical layer) of the user terminal may report (indicate) a beam failure instance to a higher layer (MAC layer).

A criterion for determination of beam failure occurrence detection is not limited to a Block Error Rate (BLER), and may be a Reference Signal Received Power in the physical layer (L1-RS Received Power (L1-RSRP)). Beam failure detection may be performed based on a downlink control channel (Physical Downlink Control Channel (PDCCH)) or the like, instead of reference signal (RS) measurements or in addition to reference signal (RS) measurements. A Beam Failure Detection RS (BFD-RS) may be expected to be quasi-co-location (QCL) with a PDCCH DMRS monitored by the user terminal.

Information about Beam Failure Detection RSs (BFD-RSs) such as the indexes, resources, number, numbers of ports, or precoding of reference signals, and information about Beam Failure Detection (BFD) such as the above-described threshold value may be configured (reported) to the user terminal using higher layer signaling. Information about Beam Failure Detection RSs (BFD-RSs) may be referred to as information about BFD resources.

The higher layer signaling may be, for example, one of Radio Resource Control (RRC) signaling, Medium Access Control (MAC) signaling, and broadcast information, or a combination of these.

The MAC layer of the user terminal may start a given timer when receiving a beam failure instance report from the physical layer of the user terminal. The timer may be referred to as a beam failure detection timer. The MAC layer of the user terminal may trigger beam failure recovery (BFR) (for example, start one of random access procedures described later) when the beam failure instance report has been received a certain number of times (e.g., beamFailureInstanceMaxCount configured by RRC) or more before the timer expires.

The Transmission Reception Point (TRP) may determine that the user terminal has detected a beam failure when there is no notification from the user terminal or when a given signal (a beam recovery request in step S104) is received from the user terminal.

In step S103, the user terminal starts a search for a new candidate beam to be newly used for communication for beam recovery. The user terminal may select a new candidate beam corresponding to a given reference signal (RS) by measuring the reference signal (RS). A reference signal (RS) measured in step S103 may be referred to as a New Candidate Beam Identification RS (NCBI-RS). A New Candidate Beam Identification RS (NCBI-RS) may be the same as or different from a Beam Failure Detection RS (BFD-RS). A new candidate beam may simply be referred to as a candidate beam.

The user terminal may determine a beam corresponding to a reference signal (RS) satisfying a given condition as a new candidate beam. For example, the user terminal may determine a new candidate beam based on a reference signal (RS) whose reference signal received power in the physical layer (L1-RSRP) exceeds a threshold value, of configured New Candidate Beam Identification RSs (NCBI-RSs). A criterion for determining a new candidate beam is not limited to L1-RSRP. L1-RSRP of a Synchronization Signal Block (SSB) may be referred to as SS-RSRP. L1-RSRP of a CSI-RS may be referred to as CSI-RSRP.

Information about New Candidate Beam Identification RSs (NCBI-RSs) such as resources, number, numbers of ports, or precoding of reference signals, and information about new candidate beam identification (NCBI) such as the above-described threshold value may be configured (reported) to the user terminal via higher layer signaling. Information about New Candidate Beam Identification RSs (NCBI-RSs) may be acquired by the user terminal based on information about Beam Failure Detection RSs (BFD-RSs). Information about New Candidate Beam Identification RSs (NCBI-RSs) may be referred to as information about resources for new candidate beam identification (NCBI).

Beam Failure Detection RSs (BFD-RSs) and New Candidate Beam Identification RSs (NCBI-RSs) may be replaced with Radio Link Monitoring RSs (RLM-RSs).

In step S104, the user terminal that has determined a new candidate beam transmits a beam recovery request (beam failure recovery request (BFRQ)) to the Transmission Reception Point (TRP). The beam recovery request (BFRQ) may be referred to as a beam recovery request signal, a beam failure recovery request signal, or the like.

The beam recovery request (BFRQ) may be transmitted using, for example, at least one of an uplink control channel (Physical Uplink Control Channel (PUCCH)), a random access channel (Physical Random Access Channel (PRACH)), an uplink shared channel (Physical Uplink Shared Channel (PUSCH)), a Sounding Reference Signal (SRS), and a configured grant PUSCH.

The beam recovery request (BFRQ) may include information on the new candidate beam determined in step S103. A resource for the beam recovery request (BFRQ) may be associated with the new candidate beam. Beam information may be reported using a beam index (BI), a port index of a given reference signal, a resource index (e.g., a CSI-RS resource indicator), a Synchronization Signal Block (SSB) resource indicator (SSBRI), or the like.

In future radio communication systems (e.g., Rel. 15 and NR), Contention-Based BFR (CB-BFR), which is beam failure recovery (BFR) based on a contention-based random access procedure, and Contention-Free BFR (CF-BFR), which is beam failure recovery (BFR) based on a contention-free random access procedure, have been studied. In CR-BFR and CF-BFR, the user terminal may transmit a preamble as a beam recovery request (BFRQ), using a PRACH resource. The preamble may be referred to as a random access (RA) preamble, a random access channel (PRACH), or a RACH preamble.

In beam failure recovery based on the contention-based random access procedure (CB-BFR), the user terminal may transmit a preamble randomly selected from one or more preambles. In beam failure recovery based on the contention-free random access procedure (CF-BFR), the user terminal may transmit a UE-specific preamble assigned from the base station. In CB-BFR, the base station may assign the same preamble to multiple user terminals. In CF-BFR, the base station may assign preambles to user terminals, individually.

Beam failure recovery based on the contention-based random access procedure (CB-BFR) may be referred to as Contention-based PRACH-based BFR (CBRA-BFR). Beam failure recovery based on the contention-free random access procedure (CF-BFR) may be referred to as Contention-free PRACH-based BFR (CFRA-BFR). CBRA-BFR may be referred to as CBRA for BFR. CFRA-BFR may be referred to as CFRA for BFR.

In beam failure recovery based on the contention-based random access procedure (CB-BFR), when the base station receives a preamble as a beam recovery request (BFRQ), it does not have to be able to identify from which user terminal the preamble has been transmitted. The base station can determine the identifier (e.g., Cell-Radio Network Temporary Identifier (C-RNTI)) of the user terminal that has transmitted the preamble by performing contention resolution between the beam recovery request (BFRQ) and the completion of beam reconfiguration.

A signal (e.g., a preamble) transmitted by the user terminal during the random access procedure may be assumed to be a beam recovery request (BFRQ).

In both beam failure recovery based on the contention-based random access procedure (CB-BFR) and beam failure recovery based on the contention-free random access procedure (CF-BFR), information about a PRACH resource (a RA preamble) may be reported by higher layer signaling (e.g. RRC signaling). For example, the information may include information indicating a correspondence relationship between a detected DL-RS (beam) and a PRACH resource. Different DL-RSs may be associated with different PRACH resources.

Beam failure detection may be performed in the MAC layer. For beam failure recovery based on the contention-based random access procedure (CB-BFR), the user terminal may determine that contention resolution has succeeded when receiving a PDCCH corresponding to the C-RNTI of the user terminal.

Random access (RA) parameters for beam failure recovery based on the contention-based random access procedure (CB-BFR) and beam failure recovery based on the contention-free random access procedure (CF-BFR) may be comprised of the same parameter set, or may be configured to different values.

For example, a parameter (ResponseWindowSize-BFR) indicating a duration for gNB response monitoring in a Control Resource Set (CORESET) for a beam failure recovery response after a beam recovery request (BFRQ) may be applied only to one of beam failure recovery based on the contention-based random access procedure (CB-BFR) and beam failure recovery based on the contention-free random access procedure (CF-BFR).

In future radio communication systems (e.g., Rel. 16), it has been studied to transmit a beam recovery request (BFRQ) using an uplink channel such as a PUCCH, a PUSCH, or an SRS. For example, the user terminal may transmit a beam recovery request (BFRQ) using a PUCCH scheduling request (SR) resource.

In step S105, the Transmission Reception Point (e.g., a base station) that has detected the beam recovery request (BFRQ) transmits a response signal to the beam recovery request (BFRQ) from the user terminal. The response signal may be referred to as a gNB response. The response signal may include reconfiguration information about one or more beams (e.g., DL-RS resource configuration information).

The response signal may be transmitted in a PDCCH user terminal common Search Space, for example. The response signal may be reported using a PDCCH or Downlink Control Information (DCI) with a Cyclic Redundancy Check (CRC) scrambled with the identifier of the user terminal, e.g., the C-RNTI. The user terminal may determine at least one of a transmission beam and a reception beam to be used based on beam reconfiguration information.

The user terminal may monitor the response signal to the beam recovery request (BFRQ Response (BFRQR)) in a Search Space for the response signal. The user terminal may monitor the response signal, based on at least one of a CORESET for beam failure recovery (BFR) and a Search Space set for beam failure recovery (BFR).

For beam failure recovery based on the contention-based random access procedure (CB-BFR), the user terminal may determine that contention resolution has succeeded when receiving a PDCCH corresponding to the C-RNTI of the user terminal.

For processing in step S105, a period may be configured for the user terminal to monitor a response from the Transmission Reception Point (TRP) to the beam recovery request (BFRQ). The period may be referred to as, for example, a gNB response window, a gNB window, a beam recovery request response window, or the like.

The user terminal may retransmit the beam recovery request (BFRQ) if there is no gNB response detected in the window period.

In step S106, the user terminal may transmit a message to notify the Transmission Reception Point (TRP) of the completion of beam reconfiguration. The message may be transmitted by, for example, a PUCCH or PUSCH.

A beam recovery success (BR success) may represent, for example, a case where step S106 has been reached. A beam recovery failure (BR failure) may correspond to, for example, beam recovery request (BFRQ) transmission reaching a given number of times. A beam recovery failure may correspond to, for example, the expiration of a Beam-failure-recovery-timer.

The numbers of the steps in Fig. 2 are merely numbers for explanation. Multiple steps may be performed together, or the order of the steps may be changed. Whether or not to perform the beam failure recovery (BFR) procedure may be configured to the user terminal via higher layer signaling.

As described above, it has been studied to switch the beam (QCL assumption or TCI state) of CORESET #0 according to a PRACH transmitted in the random access procedure. Alternatively, it has also been studied to explicitly configure the beam (TCI state) of CORESET #0 in an upper layer (RRC or MAC CE).

It has been studied to use CORESET #0 not only for initial access but also for unicast PDCCH allocation after RRC. However, to locate PDCCHs including a unicast one in CORESET #0, it is necessary to perform the beam failure recovery (BFR) procedure.

According to specifications, the user terminal receives configuration information including at least one of information indicating beam failure detection resources (beam failure detection resource information) and information indicating measurement resources of switching candidate radio links (candidate beams) (candidate beam information) via higher layer signaling (e.g., RRC signaling).

The beam failure detection resource information is also called, for example, Beam-Failure-Detection-RS-ResourceConfig, failureDetectionResources, or the like, and may indicate a set including one or more resources (beam failure detection resources) for a downlink reference signal (e.g., a CSI-RS) configured with certain periodicity.

The candidate beam information is also called, for example, Candidate-Beam-RS-List, Candidate-Beam-RS-Identification-Resource, beamFailureCandidateBeamResource, or the like, and may indicate a set including one or more resources (measurement resources) for a downlink reference signal (e.g., at least one of a CSI-RS and an SS/PBCH block) configured for radio link measurements.

If the beam failure detection resource information is not configured to the user terminal, the user terminal may determine a set of one or more resources for a downlink reference signal (e.g., at least one of a CSI-RS and an SS/PBCH block) associated with a PDCCH, as a resource(s) for beam failure detection.

The downlink reference signal associated with the PDCCH may be at least one of a CSI-RS resource and an SS/PBCH block having a quasi-co-location (QCL) relationship with a PDCCH demodulation reference signal (DMRS) monitored in a CORESET. The QCL relationship may be indicated by a TCI state. The downlink reference signal associated with the PDCCH may be at least one of a CSI-RS resource and an SS/PBCH block having the same TCI state as the PDCCH DMRS.

Thus, according to the specifications, a Beam Failure Detection RS (BFD-RS) is explicitly reported by higher layer signaling (e.g., RRC signaling). In CORESET #0, beams are switched by a PRACH, and thus it is difficult to explicitly configure a Beam Failure Detection RS (BFD-RS) by higher layer signaling (e.g., RRC signaling).

If no Beam Failure Detection RS (BFD-RS) is configured, the user terminal determines a reference signal having a QCL type D relationship with the TCI state of a CORESET used to monitor a PDCCH as a Beam Failure Detection RS (BFD-RS). The TCI state of a CORESET means one explicitly configured by higher layer signaling (e.g., RRC signaling). However, for CORESET #0, a TCI state cannot be explicitly configured. Thus, it is unknown what reference signal the user terminal will use as a Beam Failure Detection RS (BFD-RS) for CORESET #0.

Therefore, the present inventors have specifically studied about the configuration of beam failure recovery (BFR) for CORESET #0.

Hereinafter, a radio communication method according to the present embodiment will be described in detail with reference to the accompanying drawings.

### (Radio communication method)

As described above, the TCI state of a CORESET means one explicitly configured by higher layer signaling (e.g., RRC signaling). However, for CORESET #0, a TCI state cannot be explicitly configured by higher layer signaling (e.g., RRC signaling). Therefore, the QCL assumption of a beam of CORESET #0 may be used.

In a CORESET #0 beam failure recovery (BFR) procedure, the user terminal may determine a reference signal (RS) having a QCL type D relationship with the QCL assumption of CORESET #0 as a Beam Failure Detection RS (BFD-RS).

If no Beam Failure Detection RS (BFD-RS) is configured to the user terminal by higher layer signaling, the user terminal may determine a set of one or more resources for a downlink reference signal (e.g., at least one of a CSI-RS and an SS/PBCH block) associated with each CORESET (CORESET #0) for monitoring a PDCCH, as a resource(s) for beam failure detection.

Alternatively, if no Beam Failure Detection RS (BFD-RS) is configured to the user terminal by higher layer signaling, the user terminal may set a set of one or more resources for a downlink reference signal (e.g., at least one of a CSI-RS and an SS/PBCH block) having a QCL type D relationship with the QCL assumption of each CORESET (CORESET #0) for monitoring a PDCCH, as a resource(s) for beam failure detection.

The user terminal may expect that the set of one or more resources for the downlink reference signal includes up to two RS indexes. If the set includes two RS indexes, the set may include only RS indexes that have a QCL type D relationship with the QCL assumption of each CORESET (CORESET #0) for the user terminal to monitor a PDCCH.

This configuration enables CORESET #0 beam failure recovery (BFR), and allows quick re-connection to a beam of good quality if the beam quality of CORESET #0 deteriorates.

### (Radio communication system)

Hereinafter, a configuration of a radio communication system according to the present embodiment will be described. In this radio communication system, the radio communication method according to the above-described embodiment is applied.

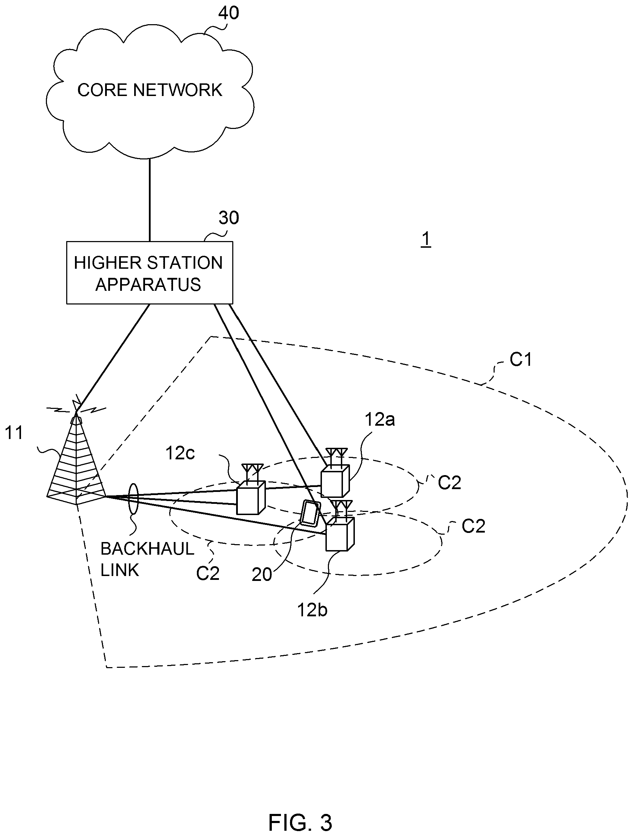

Fig. 3 is a diagram showing an example of a schematic configuration of the radio communication system according to the present embodiment. In a radio communication system 1, Carrier Aggregation (CA) or Dual Connectivity (DC) in which multiple fundamental frequency blocks (component carriers (CCs)) with the system bandwidth of an LTE system (e.g., 20 MHz) as one unit are aggregated can be applied. The radio communication system 1 may be referred to as SUPER 3G, LTE-Advanced (LTE-A), IMT-Advanced, 4G, 5G, Future Radio Access (FRA), New Radio (NR), etc.

The radio communication system 1 may support dual connectivity between multiple Radio Access Technologies (RATs) (Multi-RAT DC (MR-DC)). MR-DC may include dual connectivity between LTE and NR in which a LTE (E-UTRA) base station (eNB) is a master node, and an NR base station (gNB) is a secondary node (E-UTRA-NR DC (EN-DC)), dual connectivity between NR and LTE in which an NR base station (gNB) is a master node, and an LTE base station (eNB) is a secondary node (NR-E-UTRA DC (NE-DC)), etc.

The radio communication system 1 includes a base station 11 that forms a macro cell C1, and base stations 12a to 12c that are located in the macro cell C1 and form small cells C2 smaller than the macro cell C1. A user terminal 20 is located in the macro cell C1 and in each small cell C2. Numerology applied may differ between the cells. Numerology refers to a signal design in a RAT or a set of communication parameters characterizing a RAT design.

The user terminal 20 can be connected to both the base station 11 and each base station 12. The user terminal 20 is expected to simultaneously use the macro cell C1 and the small cells C2 using different frequencies by carrier aggregation (CA) or dual connectivity (DC). The user terminal 20 can apply carrier aggregation (CA) or dual connectivity (DC) using a plurality of cells (CCs) (e.g., two or more CCs). The user terminal can use a licensed band CC and an unlicensed band CC as the multiple cells. One of the multiple cells may include a TDD carrier to which a shortened TTI is applied.

Communications between the user terminal 20 and the base station 11 can be performed using a carrier with a narrow bandwidth in a relatively low frequency band (e.g., 2 GHz) (which is referred to as an existing carrier, a Legacy carrier, or the like). Between the user terminal 20 and each base station 12, a carrier with a wide bandwidth in a relatively high frequency band (such as 3.5 GHz, 5 GHz, or 30 to 70 GHz) may be used, or the same carrier as that used between the user terminal 20 and the base station 11 may be used. The configuration of a frequency band used by each base station is not limited to this.

The base station 11 and each base station 12 (or two of the base stations 12) can be connected by wire (e.g., optical fiber in compliance with the common public radio interface (CPRI) or the X2 interface) or connected by radio.

The base station 11 and each base station 12 are each connected to higher station apparatus 30, and are connected to a core network 40 via the higher station apparatus 30. The higher station apparatus 30 includes, for example, an access gateway apparatus, a radio network controller (RNC), a mobility management entity (MME), etc., but is not limited to these. Each base station 12 may be connected to the higher station apparatus 30 via the base station 11.

The base station 11 is a base station having a relatively large coverage, and may be referred to as a macro base station, an aggregate node, an eNB (eNodeB), a Transmission Reception Point, or the like. The base stations 12 are base stations having local coverages, and may be referred to as small base stations, micro base stations, pico base stations, femto base stations, Home eNodeBs (HeNBs), Remote Radio Heads (RRHs), Transmission Reception Points, or the like. Hereinafter, the base stations 11 and 12 will be collectively referred to as base stations 10 when not distinguished.

User terminals 20 are terminals that support various communication schemes such as LTE and LTE-A, and may include not only mobile communication terminals but also fixed communication terminals.

In the radio communication system 1, as radio access schemes, orthogonal frequency-division multiple access (OFDMA) can be applied to downlinks (DLs), and single-carrier frequency-division multiple access (SC-FDMA) can be applied to uplinks (ULs). OFDMA is a multi-carrier transmission scheme to perform communications by dividing a frequency band into multiple narrow frequency bands (subcarriers) and mapping data to the subcarriers. SC-FDMA is a single-carrier transmission scheme to reduce interference between terminals by dividing a system bandwidth into bands each formed of one or consecutive Resource Blocks for each terminal so that different terminals use different bands. Uplink and downlink radio access schemes are not limited to the combination of these. OFDMA may be used in uplinks.

The radio communication system 1 uses, as DL channels, a downlink data channel (Physical Downlink Shared Channel (PDSCH), which is also referred to as a downlink shared channel or the like) shared by user terminals 20, a broadcast channel (Physical Broadcast Channel (PBCH)), L1/L2 control channels, etc. User data, higher layer control information, a System Information Block (SIB), etc. are transmitted by a PDSCH. A Master Information Block (MIB) is transmitted by a PBCH.

The L1/L2 control channels include downlink control channels (a Physical Downlink Control Channel (PDCCH) and an Enhanced Physical Downlink Control Channel (EPDCCH)), a Physical Control Format Indicator Channel (PCFICH), a Physical Hybrid-ARQ Indicator Channel (PHICH), etc. Downlink Control Information (DCI) including PDSCH and PUSCH scheduling information, and so on are transmitted by a PDCCH. The number of OFDM symbols to be used for a PDCCH is transmitted by a PCFICH. Delivery acknowledgment information (ACK/NACK) of a HARQ to a PUSCH is transmitted by a PHICH. An EPDCCH is frequency-division-multiplexed with a PDSCH (a downlink shared data channel) and is used to transmit DCI etc. like a PDCCH.

The radio communication system 1 uses, as UL channels, an uplink data channel (Physical Uplink Shared Channel (PUSCH), which is also referred to as an uplink shared channel or the like) shared by user terminals 20, an uplink control channel (Physical Uplink Control Channel (PUCCH)), a random access channel (Physical Random Access Channel (PRACH)), etc. User data and higher layer control information are transmitted by a PUSCH. Uplink Control Information (UCI) including at least one of delivery acknowledgment information (ACK/NACK), radio quality information (CQI), etc. is transmitted by a PUSCH or a PUCCH. A random access preamble for establishing connection with a cell is transmitted by a PRACH.

### <Base station>

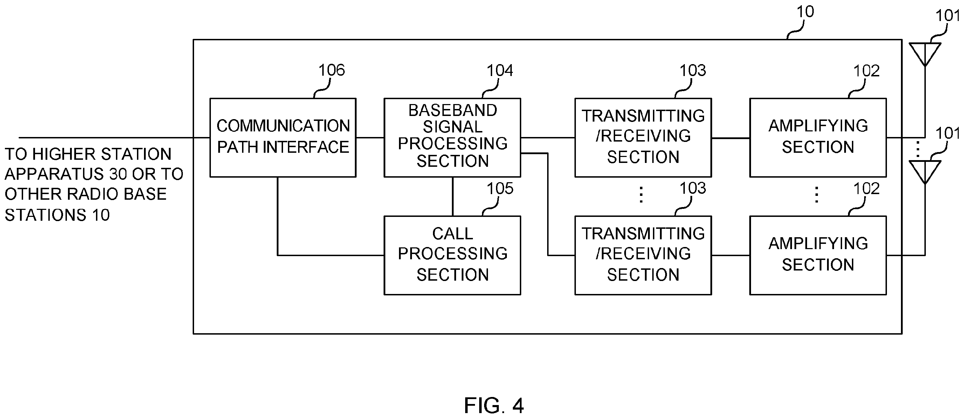

Fig. 4 is a diagram showing an example of an overall configuration of a base station according to the present embodiment. A base station 10 includes a plurality of transmitting and receiving antennas 101, amplifying sections 102, transmitting and receiving sections 103, a baseband signal processing section 104, a call processing section 105, and a communication path interface 106. The numbers of the transmitting and receiving antennas 101, the amplifying sections 102, and the transmitting and receiving sections 103 included may each be one or more. The base station 10 may be a downlink data transmitting apparatus and an uplink data receiving apparatus.

Downlink data to be transmitted from the base station 10 to a user terminal 20 is input from the higher station apparatus 30 through the communication path interface 106 to the baseband signal processing section 104.

In the baseband signal processing section 104, downlink data is subjected to transmission processing such as Packet Data Convergence Protocol (PDCP) layer processing, division and coupling of user data, Radio Link Control (RLC) layer transmission processing such as RLC retransmission control, Medium Access Control (MAC) retransmission control (e.g., HARQ transmission processing), scheduling, transmission format selection, channel coding, inverse fast Fourier transform (IFFT) processing, and precoding processing, and is transferred to the transmitting and receiving sections 103. A downlink control signal is also subjected to transmission processing such as channel coding and an inverse fast Fourier transform, and is transferred to the transmitting and receiving sections 103.

The transmitting and receiving sections 103 convert baseband signals precoded and output on an antenna-by-antenna basis from the baseband signal processing section 104 into a radio frequency band for transmission. Radio frequency signals frequency-converted by the transmitting and receiving sections 103 are amplified by the amplifying sections 102 and transmitted from the transmitting and receiving antennas 101. Each transmitting and receiving section 103 may be a transmitter/receiver, a transmitting and receiving circuit, or a transmitting and receiving apparatus that is explained based on a common understanding in the technical field of the present invention. Each transmitting and receiving section 103 may be configured as a one-piece transmitting and receiving section, or may be comprised of a transmitting section and a receiving section.

For uplink signals, radio frequency signals received by the transmitting and receiving antennas 101 are amplified by the amplifying sections 102. The transmitting and receiving sections 103 receive the uplink signals amplified by the amplifying sections 102. The transmitting and receiving sections 103 frequency-convert the received signals into baseband signals and output them to the baseband signal processing section 104.

In the baseband signal processing section 104, user data included in the input uplink signals is subjected to fast Fourier transform (FFT) processing, inverse discrete Fourier transform (IDFT) processing, error correction decoding, MAC retransmission control reception processing, and RLC layer and PDCP layer reception processing, and is transferred through the communication path interface 106 to the higher station apparatus 30. The call processing section 105 performs call processing such as configuration and release of communication channels, state management of the base station 10, and radio resource management.

The communication path interface 106 transmits and receives signals to and from the higher station apparatus 30 through a given interface. The communication path interface 106 may transmit and receive signals to and from the other base stations 10 (backhaul signaling) through an inter-base station interface (e.g., optical fiber in compliance with the Common Public Radio Interface (CPRI) or the X2 interface).

Each transmitting and receiving section 103 may further include an analog beam forming unit that performs analog beam forming. The analog beam forming unit may be an analog beam forming circuit (e.g., a phase shifter or a phase shift circuit) or an analog beam forming apparatus (e.g., a phase shifter) that is explained based on a common understanding in the technical field of the present invention. The transmitting and receiving antennas 101 may be, for example, an array antenna. The transmitting and receiving sections 103 are configured to be able to apply single BF and multi BF.

The transmitting and receiving sections 103 may transmit signals using a transmission beam, and may receive signals using a reception beam. The transmitting and receiving sections 103 may transmit and receive signals using a given beam determined by a control section 301.

The transmitting and receiving sections 103 transmit downlink signals (such as a downlink control signal (a downlink control channel), a downlink data signal (a downlink data channel or a downlink shared channel), a downlink reference signal (such as a DM-RS or a CSI-RS), a discovery signal, a synchronization signal, and a broadcast signal). The transmitting and receiving sections 103 receive uplink signals (such as an uplink control signal (an uplink control channel), an uplink data signal (an uplink data channel or an uplink shared channel), and an uplink reference signal).

The transmitting and receiving sections 103 may receive a beam recovery request (BFRQ) and transmit a response signal to the beam recovery request (BFRQR) in a beam recovery procedure.

A transmitting section and a receiving section of the present invention are constituted by the transmitting and receiving sections 103 and/or the communication path interface 106.

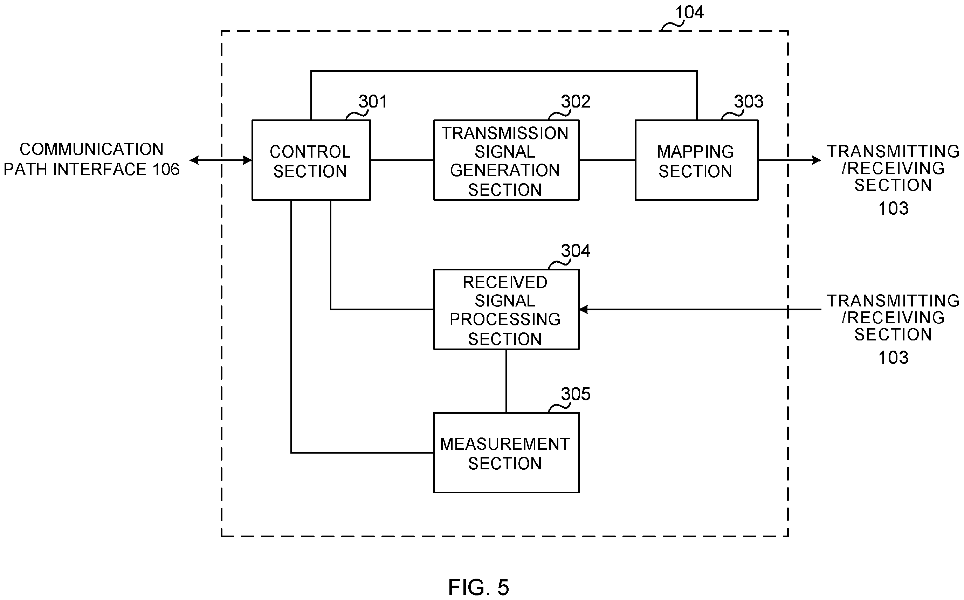

Fig. 5 is a diagram showing an example of a functional configuration of the base station according to the present embodiment. This figure mainly shows functional blocks of characteristic parts in the present embodiment. It is assumed that the base station 10 also includes other functional blocks necessary for radio communications. The baseband signal processing section 104 includes at least the control section 301, a transmission signal generation section 302, a mapping section 303, a received signal processing section 304, and a measurement section 305.

The control section 301 performs overall control of the base station 10. The control section 301 may be a controller, a control circuit, or a control apparatus that is explained based on a common understanding in the technical field of the present invention.

The control section 301 controls, for example, generation of signals by the transmission signal generation section 302, and assignment of signals by the mapping section 303. The control section 301 controls signal reception processing by the received signal processing section 304 and signal measurements by the measurement section 305.

The control section 301 controls scheduling (e.g., resource allocation) of downlink signals and uplink signals. Specifically, the control section 301 controls the transmission signal generation section 302, the mapping section 303, and the transmitting and receiving sections 103, to generate and transmit DCI including scheduling information of a downlink data channel (a DL assignment or a DL grant) and DCI including scheduling information of an uplink data channel (a UL grant).

The transmission signal generation section 302 generates downlink signals (a downlink control channel, a downlink data channel, a downlink reference signal such as a DM-RS, etc.) based on instructions from the control section 301, and outputs them to the mapping section 303. The transmission signal generation section 302 may be a signal generator, a signal generation circuit, or a signal generation apparatus that is explained based on a common understanding in the technical field of the present invention.

The mapping section 303 maps downlink signals generated by the transmission signal generation section 302 to given radio resources, based on instructions from the control section 301, and outputs them to the transmitting and receiving sections 103. The mapping section 303 may be a mapper, a mapping circuit, or a mapping apparatus that is explained based on a common understanding in the technical field of the present invention.

The received signal processing section 304 performs reception processing (such as demapping, demodulation, and decoding) on received signals input from the transmitting and receiving sections 103. For example, the received signals are uplink signals (an uplink control channel, an uplink data channel, an uplink reference signal, etc.) transmitted from user terminals 20. The received signal processing section 304 may be a signal processor, a signal processing circuit, or a signal processing apparatus that is explained based on a common understanding in the technical field of the present invention.

The received signal processing section 304 outputs information decoded by the reception processing to the control section 301. For example, the reception processing unit 304 outputs at least one of a preamble, control information, and UL data to the control section 301. The received signal processing section 304 also outputs received signals and signals after the reception processing to the measurement section 305.

The measurement section 305 performs measurements on received signals. The measurement section 305 may be a measuring instrument, a measurement circuit, or a measurement apparatus that is explained based on a common understanding in the technical field of the present invention.

The measurement section 305 may measure, for example, the received power (e.g., Reference Signal Received Power (RSRP)), the received quality (e.g., Reference Signal Received Quality (RSRQ)), the channel state, etc. of a received signal. Measurement results may be output to the control section 301.

### <User terminal>

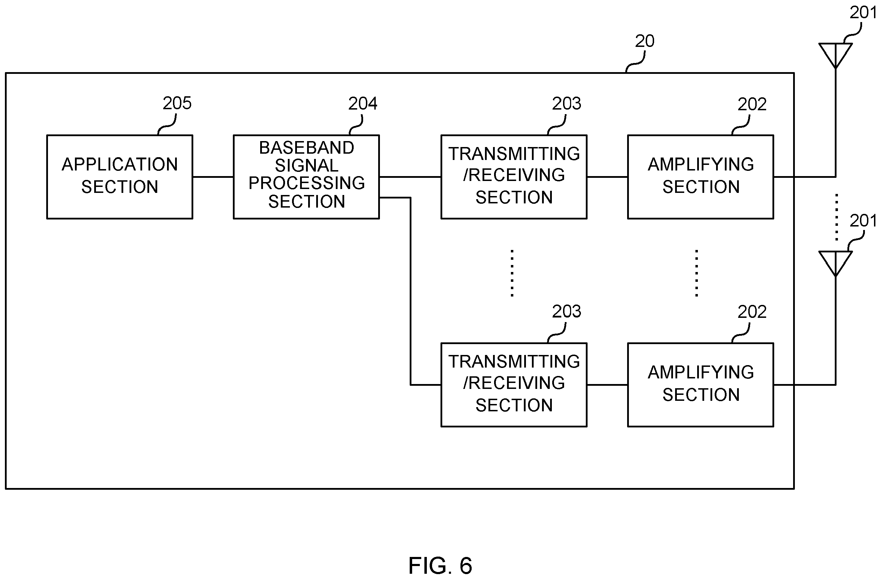

Fig. 6 is a diagram showing an example of an overall configuration of a user terminal according to the present embodiment. A user terminal 20 includes a plurality of transmitting and receiving antennas 201, amplifying sections 202, transmitting and receiving sections 203, a baseband signal processing section 204, and an application section 205. The numbers of the transmitting and receiving antennas 201, the amplifying sections 202, and the transmitting and receiving sections 203 included may each be one or more. The user terminal 20 may be a downlink data receiving apparatus and an uplink data transmitting apparatus.

Radio frequency signals received by the transmitting and receiving antennas 201 are amplified by the amplifying sections 202. The transmitting and receiving sections 203 receive downlink signals amplified by the amplifying sections 202. The transmitting and receiving sections 203 frequency-convert received signals into baseband signals and output them to the baseband signal processing section 204. Each transmitting and receiving section 203 may be a transmitter/receiver, a transmitting and receiving circuit, or a transmitting and receiving apparatus that is explained based on a common understanding in the technical field of the present invention. Each transmitting and receiving section 203 may be configured as a one-piece transmitting and receiving section, or may be comprised of a transmitting section and a receiving section.

The baseband signal processing section 204 performs FFT processing, error correction decoding, retransmission control reception processing, etc. on input baseband signals. Downlink data is transferred to the application section 205. The application section 205 performs processing related to a layer higher than the physical layer and the MAC layer, etc. System information and higher layer control information of downlink data are also transferred to the application section 205.

Uplink user data is input from the application section 205 to the baseband signal processing section 204. The baseband signal processing section 204 performs retransmission control transmission processing (e.g., HARQ transmission processing), channel coding, precoding, discrete Fourier transform (DFT) processing, IFFT processing, etc. for transfer to the transmitting and receiving sections 203. The transmitting and receiving sections 203 convert baseband signals output from the baseband signal processing section 204 into a radio frequency band for transmission. Radio frequency signals frequency-converted by the transmitting and receiving sections 203 are amplified by the amplifying sections 202 and transmitted from the transmitting and receiving antennas 201.

Each transmitting and receiving section 203 may further include an analog beam forming unit that performs analog beam forming. The analog beam forming unit may be an analog beam forming circuit (e.g., a phase shifter or a phase shift circuit) or an analog beam forming apparatus (e.g., a phase shifter) that is explained based on a common understanding in the technical field of the present invention. The transmitting and receiving antennas 201 may be, for example, an array antenna. The transmitting and receiving sections 203 are configured to be able to apply single BF and multi BF.

The transmitting and receiving sections 203 may transmit signals using a transmission beam, and may receive signals using a reception beam. The transmitting and receiving sections 203 may transmit and receive signals using a given beam determined by a control section 401.

The transmitting and receiving sections 203 receive downlink signals (such as a downlink control signal (a downlink control channel), a downlink data signal (a downlink data channel or a downlink shared channel), a downlink reference signal (such as a DM-RS or a CSI-RS), a discovery signal, a synchronization signal, and a broadcast signal). The transmitting and receiving sections 203 transmit uplink signals (such as an uplink control signal (an uplink control channel), an uplink data signal (an uplink data channel or an uplink shared channel), and an uplink reference signal).

The transmitting and receiving sections 203 may monitor a PDCCH in CORESET #0.

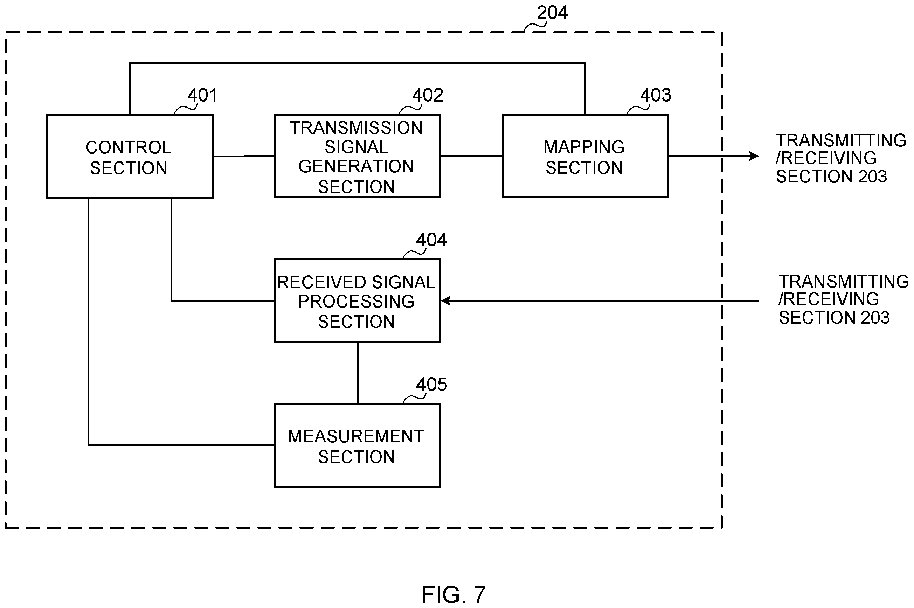

Fig. 7 is a diagram showing an example of a functional configuration of the user terminal according to the present embodiment. This figure mainly shows functional blocks of characteristic parts in the present embodiment. It is assumed that the user terminal 20 also includes other functional blocks necessary for radio communications. The baseband signal processing section 204 of the user terminal 20 includes at least the control section 401, a transmission signal generation section 402, a mapping section 403, a received signal processing section 404, and a measurement section 405.

The control section 401 performs overall control of the user terminal 20. The control section 401 may be a controller, a control circuit, or a control apparatus that is explained based on a common understanding in the technical field of the present invention.

The control section 401 controls, for example, the generation of signals by the transmission signal generation section 402 and the assignment of signals by the mapping section 403. The control section 401 controls signal reception processing by the received signal processing section 404 and signal measurements by the measurement section 405.

The control section 401 may determine a set of one or more resources for a downlink reference signal associated with CORESET #0 as a resource(s) for beam failure detection (BFD).

The control section 401 may determine a set of one or more resources for a downlink reference signal having a QCL type D relationship with the quasi-co-location (QCL) assumption of CORESET #0 as a resource(s) for beam failure detection.

When a set of one or more resources for a downlink reference signal includes two reference signal indexes, the control section 401 may expect that the set includes only reference signal indexes having a QCL type D relationship with the QCL assumption of CORESET #0.

The transmission signal generation section 402 generates uplink signals (an uplink control channel, an uplink data channel, an uplink reference signal, etc.) based on instructions from the control section 401, and outputs them to the mapping section 403. The transmission signal generation section 402 may be a signal generator, a signal generation circuit, or a signal generation apparatus that is explained based on a common understanding in the technical field of the present invention.

The transmission signal generation section 402 generates an uplink data channel based on an instruction from the control section 401. For example, when a UL grant is included in a downlink control channel reported from a base station 10, the transmission signal generation section 402 is instructed by the control section 401 to generate an uplink data channel.

The mapping section 403 maps uplink signals generated by the transmission signal generation section 402 to radio resources, based on instructions from the control section 401, and outputs them to the transmitting and receiving sections 203. The mapping section 403 may be a mapper, a mapping circuit, or a mapping apparatus that is explained based on a common understanding in the technical field of the present invention.

The received signal processing section 404 performs reception processing (such as demapping, demodulation, and decoding) on received signals input from the transmitting and receiving sections 203. The received signals are, for example, downlink signals (a downlink control channel, a downlink data channel, a downlink reference signal, etc.) transmitted from a base station 10. The received signal processing section 404 may be a signal processor, a signal processing circuit, or a signal processing apparatus that is explained based on a common understanding in the technical field of the present invention. The received signal processing section 404 may constitute a receiving section according to the present invention.

The received signal processing section 404 blind decodes a downlink control channel for scheduling the transmission and reception of a downlink data channel, based on an instruction from the control section 401, and performs reception processing on the downlink data channel based on the DCI. The received signal processing section 404 estimates a channel gain based on a DM-RS or a CRS, and demodulates a downlink data channel based on the estimated channel gain.

The received signal processing section 404 outputs information decoded by the reception processing to the control section 401. The received signal processing section 404 outputs, for example, broadcast information, system information, RRC signaling, DCI, etc. to the control section 401. The received signal processing section 404 may output data decoding results to the control section 401. The received signal processing section 404 outputs received signals and signals after the reception processing to the measurement section 405.

The measurement section 405 performs measurements on received signals. The measurement section 405 may be a measuring instrument, a measurement circuit, or a measurement apparatus that is explained based on a common understanding in the technical field of the present invention.

The measurement section 405 may measure, for example, the received power (e.g., RSRP), the DL received quality (e.g., RSRQ), the channel state, etc. of a received signal. Measurement results may be output to the control section 401.

### (Hardware configuration)

The block diagrams used to describe the above embodiment show blocks in functional units. These functional blocks (components) are implemented by a desired combination of at least one of hardware and software. Each functional block is not limited to a particular implementation method. That is, each functional block may be implemented using a single physically or logically unified apparatus, or may be implemented by directly or indirectly connecting two or more physically or logically separate apparatuses (using, for example, wires, radio, or the like) and using these two or more apparatuses. The functional block may be implemented by combining software with the single apparatus or the two or more apparatuses.

Here, the functions include, but not limited to, judging, determining, deciding calculating, computing, processing, deriving, checking, searching, acknowledging, receiving, transmitting, outputting, accessing, solving, selecting, choosing, establishing, comparing, assuming, expecting, deeming, broadcasting, notifying, communicating, forwarding, configuring, reconfiguring, allocating, mapping, assigning, etc. For example, a functional block (component) that serves to transmit may be referred to as a transmitting section, a transmitter, or the like. Each of them is not limited to a particular implementation method as described above.

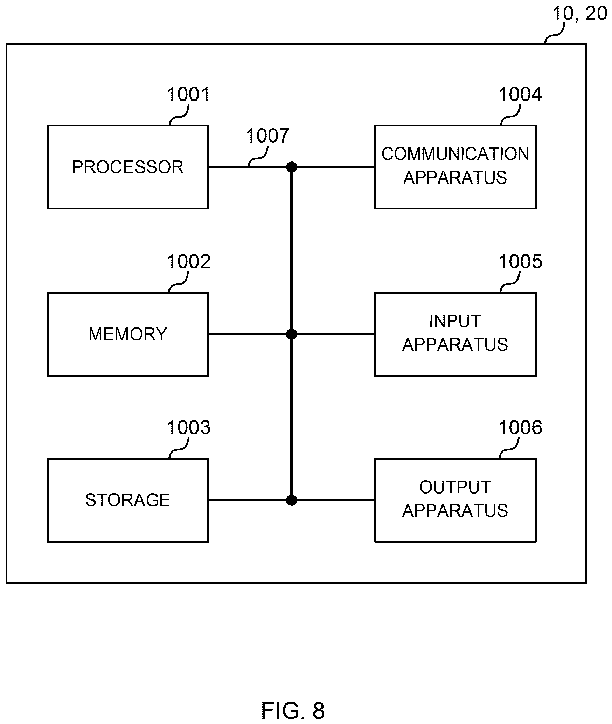

For example, base stations, user terminals, etc. in one embodiment of the present disclosure may each function as a computer that executes processing in the radio communication method of the present disclosure. Fig. 8 is a diagram showing an example of a hardware configuration of a base station and a user terminal according to one embodiment. The above-described base stations 10 and user terminals 20 may each be physically configured as a computer apparatus that includes a processor 1001, a memory 1002, a storage 1003, a communication apparatus 1004, an input apparatus 1005, an output apparatus 1006, a bus 1007, etc.

In the present disclosure, terms such as apparatus, circuit, device, section, and unit can be replaced with each other. The hardware configuration of the base stations 10 and the user terminals 20 may be designed to include one or more of the apparatuses illustrated in the figure, or may be designed not to include some of the apparatuses.

For example, although the only one processor 1001 is illustrated, a plurality of processors may be included. Processing may be executed by one processor, or processing may be executed by two or more processors simultaneously, sequentially, or using other methods. The processor 1001 may be implemented by one or more chips.

The functions of the base stations 10 and the user terminals 20 are implemented by, for example, given software (programs) being read on hardware such as the processor 1001 and the memory 1002, whereby the processor 1001 performs operations, controlling communications via the communication apparatus 1004, and controlling at least one of reading and writing of data at the memory 1002 and the storage 1003.

For example, the processor 1001 runs an operating system to control the entire computer. The processor 1001 may be constituted by a central processing unit (CPU) that includes an interface with peripheral equipment, a control section, an arithmetic unit, a register, etc. For example, the above-described baseband signal processing section 104 (204), call processing section 105, etc. may be implemented by the processor 1001.

The processor 1001 reads programs (program codes), software modules, data, etc. from at least one of the storage 1003 and the communication apparatus 1004 into the memory 1002, and executes various types of processing according to these. As the programs, programs to cause the computer to execute at least part of the operations described in the above embodiment are used. For example, the control section 401 of the user terminal 20 may be implemented by a control program that is stored in the memory 1002 and operates on the processor 1001. The other functional blocks may be implemented likewise.

The memory 1002 is a computer-readable recording medium, and may be constituted by, for example, at least one of a read-only memory (ROM), an erasable programmable ROM (EPROM), an electrically EPROM (EEPROM), a random-access memory (RAM), and other suitable storage media. The memory 1002 may be referred to as a register, a cache, a main memory (main storage), or the like. The memory 1002 can store programs (program codes), software modules, etc. that are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (e.g., a compact disc (such as a compact disc ROM (CD-ROM)), a digital versatile disc, or a Blu-ray (registered trademark) disk), a removable disk, a hard disk drive, a smart card, a flash memory device (e.g., a card, a stick, or a key drive), a magnetic stripe, a database, a server, and other suitable storage media. The storage 1003 may be referred to as a secondary storage apparatus.

The communication apparatus 1004 is hardware (a transmitting and receiving device) for performing inter-computer communications via at least one of a wired network and a wireless network, and is also referred to as, for example, a network device, a network controller, a network card, a communication module, or the like. The communication apparatus 1004 may include a high frequency switch, a duplexer, a filter, a frequency synthesizer, etc. to implement, for example, at least one of Frequency Division Duplex (FDD) and Time Division Duplex (TDD). For example, the above-described transmitting and receiving antennas 101 (201), amplifying sections 102 (202), transmitting and receiving sections 103 (203), communication path interface 106, etc. may be implemented by the communication apparatus 1004. Each transmitting and receiving section 103 (203) may be implemented by a transmitting section 103a (203a) and a receiving section 103b (203b) that are physically or logically separated.

The input apparatus 1005 is input devices for accepting input from the outside (such as a keyboard, a mouse, a microphone, a switch, a button, and a sensor). The output apparatus 1006 is output devices for performing output to the outside (such as a display, a speaker, and a light-emitting diode (LED) lamp). The input apparatus 1005 and the output apparatus 1006 may be combined in one unit (e.g., a touch panel).

The apparatuses such as the processor 1001 and the memory 1002 are connected by a bus 1007 for communicating information. The bus 1007 may be formed using a single bus, or may be formed using different buses for different connections between the apparatuses.

The base stations 10 and the user terminals 20 may each include hardware such as a microprocessor, a digital signal processor (DSP), an application-specific integrated circuit (ASIC), a programmable logic device (PLD), a field-programmable gate array (FPGA), etc. Part or all of the functional blocks may be implemented using the hardware. For example, the processor 1001 may be implemented using at least one of these pieces of hardware.

### (Modifications)

The terms described in the present disclosure and the terms necessary to understand the present disclosure may be replaced with terms having the same or similar meanings. For example, a channel, a symbol, and a signal (or signaling) may be replaced with each other. A signal may be a message. A reference signal may be abbreviated as an RS, and may be referred to as a pilot, a pilot signal, or the like, depending on a standard applied. A component carrier (CC) may be referred to as a cell, a frequency carrier, a carrier frequency, or the like.

A radio frame may be comprised of one or more periods (frames) in the time domain. The one or more periods (frames) constituting the radio frame may be referred to as a subframe(s). Furthermore, a subframe may be comprised of one or more slots in the time domain. A subframe may have a fixed duration (e.g., 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, etc.

A slot may be comprised of one or more symbols in the time domain, such as orthogonal frequency-division multiplexing (OFDM) symbols or single-carrier frequency-division multiple access (SC-FDMA) symbols. A slot may be a time unit based on numerology.

A slot may include a plurality of mini slots. Each mini slot may be comprised of one or more symbols in the time domain. A mini slot may be referred to as a subslot. A mini slot may be comprised of fewer symbols than a slot. A PDSCH (or a PUSCH) transmitted in a time unit larger than a mini slot may be referred to as PDSCH (PUSCH) mapping type A. A PDSCH (or a PUSCH) transmitted using a mini slot may be referred to as PDSCH (PUSCH) mapping type B.

A radio frame, a subframe, a slot, a mini slot, and a symbol each represent a time unit in signal transmission. For a radio frame, a subframe, a slot, a mini slot, and a symbol, other corresponding names may be used.

For example, one subframe may be referred to as a transmission time interval (TTI). A plurality of consecutive subframes may be referred to as a TTI. One slot or one mini slot may be referred to as a TTI. That is, at least one of a subframe and a TTI may be a subframe (1 ms) in existing LTE, or may be a period shorter than 1 ms (e.g., one to thirteen symbols), or may be a period longer than 1 ms. A unit representing a TTI may be referred to as a slot, a mini slot, or the like instead of a subframe.

Here, a TTI refers to, for example, a minimum time unit of scheduling in radio communications. For example, in LTE systems, a base station performs scheduling to allocate radio resources (such as a frequency bandwidth and transmission power that can be used at each user terminal) in TTI units for each user terminal. The definition of a TTI is not limited to this.

A TTI may be a transmission time unit of a channel-coded data packet (transport block), a code block, a codeword, etc. or may be a processing unit of scheduling, link adaptation, etc. When a TTI is given, a time interval (e.g., the number of symbols) in which a transport block, a code block, a codeword, or the like is actually mapped may be shorter than the TTI.

When one slot or one mini slot is referred to as a TTI, one or more TTIs (that is, one or more slots or one or more mini slots) may be a minimum time unit of scheduling. The number of slots (the number of mini slots) constituting the minimum time unit of scheduling may be controlled.

A TTI having a duration of 1 ms may be referred to as a usual TTI (a TTI in LTE Rel. 8 to 12), a normal TTI, a long TTI, a usual subframe, a normal subframe, a long subframe, a slot, or the like. A TTI shorter than a usual TTI may be referred to as a shortened TTI, a short TTI, a partial or fractional TTI, a shortened subframe, a short subframe, a mini slot, a subslot, a slot, or the like.

A long TTI (such as a normal TTI or a subframe) may be replaced with a TTI having a duration exceeding 1 ms. A short TTI (such as a shortened TTI) may be replaced with a TTI having a TTI length less than the TTI length of a long TTI and more than or equal to 1 ms.

A Resource Block (RB) is a resource allocation unit in the time domain and the frequency domain, and may include one or more consecutive subcarriers in the frequency domain.

A Resource Block (RB) may include one or more symbols in the time domain, and may have a length of one slot, one mini slot, one subframe, or one TTI. One TTI and one subframe may each be comprised of one or more Resource Blocks.

One or more Resource Blocks (RBs) may be referred to as Physical Resource Blocks (PRBs), Sub-Carrier Groups (SCGs), Resource Element Groups (REGs), PRB pairs, RB pairs, or the like.

A Resource Block may be comprised of one or more Resource Elements (REs). For example, one RE may be a radio resource region of one subcarrier and one symbol.

The structures of a radio frame, a subframe, a slot, a mini slot, a symbol, etc. described above are merely examples. For example, configurations such as the number of subframes included in a radio frame, the number of slots per subframe or radio frame, the number of mini slots included in a slot, the numbers of symbols and resource blocks (RBs) included in a slot or a mini slot, the number of subcarriers included in a resource block (RB), and the number of symbols, the symbol length, the cyclic prefix (CP) length, etc. in a TTI can be variously changed.

The information, parameters, etc. described in the present disclosure may be represented using absolute values, or may be represented using relative values with respect to given values, or may be represented using other corresponding information. For example, a radio resource may be specified by a given index.

The names used for parameters etc. in the present disclosure are in no respect limiting names. In addition, equations etc. using these parameters may differ from those explicitly disclosed in the present disclosure. Since various channels such as a Physical Uplink Control Channel (PUCCH) and a Physical Downlink Control Channel (PDCCH) and information elements can be identified by various suitable names, the various names assigned to these various channels and information elements are in no respect limiting names.

The information, signals, etc. described in the present disclosure may be represented using any of a variety of different technologies. For example, data, an instruction, a command, information, a signal, a bit, a symbol, a chip, etc., which can be referred to throughout the above description, may be represented by a voltage, a current, an electromagnetic wave, a magnetic field or a magnetic particle, an optical field or an optical photon, or any combination of these.

Information, signals, etc. can be output in at least one of a direction from a higher layer to a lower layer and a direction from a lower layer to a higher layer. Information, signals, etc. may be input and output via a plurality of network nodes.

Input and output information, signals, etc. may be stored in a specific location (e.g., memory), or may be managed using a control table. Information, signals, etc. to be input and output can be overwritten, updated, or appended. Information, signals, etc. that have been output may be deleted. Information, signals, etc. that have been input may be transmitted to another apparatus.

Notification of information is not limited to that in the aspects/embodiments described in the present disclosure, and may be performed using other methods. For example, notification of information may be performed by physical layer signaling (e.g., Downlink Control Information (DCI) or Uplink Control Information (UCI)), higher layer signaling (e.g., Radio Resource Control (RRC) signaling, broadcast information (such as a Master Information Block (MIB) or a System Information Block (SIB)), or Medium Access Control (MAC) signaling), another signal, or a combination of these.

Physical layer signaling may be referred to as Layer 1/Layer 2 (L1/L2) control information (an L1/L2 control signal), L1 control information (an L1 control signal), or the like. RRC signaling may be referred to as an RRC message, and may be, for example, an RRC Connection Setup message, an RRC Connection Reconfiguration message, or the like. MAC signaling may be reported using, for example, a MAC control element (MAC CE).

Notification of a given piece of information (e.g., notification that "X holds") is not limited to explicit notification, and may be made implicitly (for example, by not making notification of the given piece of information, or by notification of another piece of information).

Determination may be performed based on a value represented by 1 bit (0 or 1), or may be performed based on a Boolean represented by true or false, or may be performed by comparison between numerical values (e.g., comparison with a given value).

Software, regardless of whether it is referred to as software, firmware, middleware, microcode, or hardware description language, or referred to by another name, should be interpreted broadly to mean a command, a command set, a code, a code segment, a program code, a program, a subprogram, a software module, an application, a software application, a software package, a routine, a subroutine, an object, an executable file, an execution thread, a procedure, a function, etc.

Software, commands, information, etc. may be transmitted and received via a transmission medium. For example, when software is transmitted from a website, a server, or another remote source using at least one of a wired technology (such as a coaxial cable, an optical fiber cable, a twisted-pair cable, or a digital subscriber line (DSL)) and a wireless technology (such as infrared radiation or microwaves), at least one of the wired technology and the wireless technology is included in the definition of the transmission medium.

The terms "system" and "network" as used in the present disclosure may be used interchangeably.

In the present disclosure, terms such as "precoding", "precoder", "weight (precoding weight)", "quasi-co-location (QCL)", "Transmission Configuration Indication state (TCI state)", "spatial relation", "spatial domain filter", "transmission power", "phase rotation", "antenna port", "antenna port group", "layer", " "number of layers", "rank", "resource", "resource set", "resource group", "beam", "beam width", "beam angle", "antenna", "antenna element", and "panel" may be used interchangeably.

In the present disclosure, terms such as "base station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and "Bandwidth Part (BWP)" may be used interchangeably. A base station may be referred to by a term such as a macro cell, a small cell, a femto cell, or a pico cell.

A base station can accommodate one or more (e.g., three) cells (also called sectors). When a base station accommodates multiple cells, the entire coverage area of the base station can be divided into multiple smaller areas. Each smaller area can provide communication service through a base station subsystem (e.g., an indoor small base station (a remote radio head (RRH)). The term "cell" or "sector" refers to part or all of the coverage area of at least one of a base station and a base station subsystem that provides communication service in this coverage.

In the present disclosure, terms such as "mobile station (MS)", "user terminal", "user equipment (UE)", and "terminal" may be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of a base station and a mobile station may be referred to as a transmitting apparatus, a receiving apparatus, a communication apparatus, or the like. At least one of a base station and a mobile station may be a device mounted on a mobile object, a mobile object itself, or the like. The mobile object may be transportation (such as a vehicle or an airplane), an unmanned mobile object (such as a drone or an autonomous driving car), or a robot (manned or unmanned). At least one of a base station and a mobile station may be an apparatus that does not necessarily move during communication operation. For example, at least one of a base station and a mobile station may be an Internet of Things (IoT) device such as a sensor.

A base station in the present disclosure may be replaced with a user terminal. For example, each aspect/embodiment of the present disclosure may be applied in a configuration in which communication between a base station and a user terminal is replaced with communication between user terminals (which may be referred to as, for example, Device-to-Device (D2D), Vehicle-to-Everything (V2X), or the like). In this case, the user terminals 20 may have the functions of the base stations 10 described above. Words such as "uplink" and "downlink" may be replaced with a word for terminal-to-terminal communication (e.g., "side"). For example, an uplink channel, a downlink channel, etc. may be replaced with a side channel.

Likewise, a user terminal in the present disclosure may be replaced with a base station. In this case, the base stations 10 may have the functions of the user terminals 20 described above.

An operation performed by a base station in the present disclosure may be performed by its upper node in some cases. It is obvious that in a network including one or more network nodes having base stations, various operations performed for communications with terminals can be performed by the base stations, one or more network nodes other than the base stations (which may be, for example, a Mobility Management Entity (MME), a Serving-Gateway (S-GW), etc., but are not limited to them), or a combination of these.

The aspects/embodiments described in the present disclosure may be used singly or in combination, or may be switched and used with implementation. The procedure, sequence, flowchart, etc. in the aspects/embodiments described in the present disclosure may be changed in order as long as inconsistencies do not arise. For example, the method described in the present disclosure has presented various step elements using an exemplary order, but is not limited to the presented specific order.

The aspects/embodiments described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), New-Radio Access Technology (RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems using other suitable radio communication methods, next generation systems expanded based on these, etc. Further, the aspects/embodiments may be applied to a combination of two or more systems (such as a combination of LTE or LTE-A and 5G).

The phrase "based on" as used in the present disclosure does not mean "based only on", unless otherwise specified. In other words, the phrase "based on" means both "based only on" and "based at least on".

All references to elements using designations such as "first" and "second" as used in the present disclosure do not generally limit the amounts or sequence of these elements. These designations may be used in the present disclosure only as a convenient way to distinguish between two or more elements. Thus, references to first and second elements do not mean that only the two elements can be employed, or that the first element must precede the second element in some form.

The term "determining" as used in the present disclosure may include a wide variety of operations. For example, "determining" may be interpreted as "determining" judging, calculating, computing, processing, deriving, investigating, looking up, search, inquiry (e.g., search in a table, a database, or another data structure), ascertaining, etc.

"Determining" may be interpreted as "determining" receiving (e.g., receiving information), transmitting (e.g., transmitting information), input, output, accessing (e.g., accessing data in memory), etc.

"Determining" may be interpreted as "determining" resolving, selecting, choosing, establishing, comparing, etc. That is, "determining" may be interpreted as "determining" some operation.

"Determining" may be replaced with "assuming", "expecting", "considering", or the like.

The "maximum transmit power" described in the present disclosure may mean the maximum value of transmit power, or may mean the nominal maximum transmit power (the nominal UE maximum transmit power), or may mean the rated maximum transmit power (the rated UE maximum transmit power).

The terms "connected" and "coupled", or all variations of them as used in the present disclosure mean all direct or indirect connections or couplings between two or more elements, and may include the existence of one or more intermediate elements between two elements "connected" or "coupled" to each other. Coupling or connection between elements may be physical, logical, or a combination of these. For example, "connection" may be replaced with "access".

When two elements are connected in the present disclosure, the elements can be considered to be "connected" or "coupled" to each other, using one or more wires, a cable, a printed electrical connection, or the like, or using electromagnetic energy having a wavelength in a radio frequency range, a microwave range, or an optical (both visible and invisible) range, or the like, as some non-limiting and non-inclusive examples.

In the present disclosure, the words "A and B are different" may mean that "A and B are different from each other". Words such as "separate" and "coupled" may be interpreted likewise.

When "include", "including", and variations of these are used in the present disclosure, these words are intended to be inclusive like the word "comprising". Furthermore, the word "or" as used in the present disclosure is intended not to be exclusive-OR.

In the present disclosure, when the translation adds articles such as a, an, and the in English, the present disclosure may include cases where nouns following these articles are in the plural.

Although the invention according to the present disclosure has been described in detail above, it is obvious to a person skilled in the art that the invention according to the present disclosure is not limited to the embodiments described in the present disclosure. The invention according to the present disclosure can be implemented in modified and altered modes without departing from the spirit and scope of the invention defined based on the description of the claims. Thus, the description of the present disclosure is for the purpose of explaining examples and does not bring any limiting meaning to the invention according to the present disclosure.

This application is based on Japanese Patent Application No. 2018-169196 filed on August 23, 2018. The contents of this are all incorporated herein.

## Claims

1. A user terminal comprising:
a receiving section that monitors a downlink control channel (PDCCH) in a given control resource set (CORESET); and
a control section that determines a set of one or more resources for a downlink reference signal associated with the given CORESET as a resource(s) for beam failure detection.

2. The user terminal according to claim 1, wherein the control section determines a set of one or more resources for a downlink reference signal having a QCL type D relationship with a quasi-co-location (QCL) assumption of the given CORESET as a resource(s) for beam failure detection.

3. The user terminal according to claim 1 or 2, wherein, when the set of one or more resources for the downlink reference signal includes two reference signal indexes, the control section expects that the set includes only reference signal indexes having a QCL type D relationship with a QCL assumption of the CORESET #0.

4. A radio communication method for a user terminal, comprising the steps of:
monitoring a downlink control channel (PDCCH) in a given control resource set (CORESET); and
determining a set of one or more resources for a downlink reference signal associated with the given CORESET as a resource(s) for beam failure detection.
